# EUROPEAN PATENT SPECIFICATION

(11) **EP 3 413 708 B1**
(45) Date of publication and mention of the grant of the patent: **24.11.2021**
(21) Application number: 17713432.7
(22) Date of filing: 08.02.2017
(51) Int. Cl.: A01K 61/95, A01K 61/13

(54) **SYSTEM AND METHOD FOR RECORDING AND MONITORING HEALTH AND DEVELOPMENT IN LIVING FISH**
SYSTEM UND VERFAHREN ZUR ERFASSUNG UND ÜBERWACHUNG DER GESUNDHEIT UND ENTWICKLUNG BEI LEBENDEN FISCHEN
SYSTÈME ET PROCÉDÉ D'ENREGISTREMENT ET DE SUIVI DE LA SANTÉ ET DU DÉVELOPPEMENT CHEZ DES POISSONS VIVANTS

(30) Priority: 08.02.2016 NO 20160199
(43) Date of publication of application: 19.12.2018
(60) Divisional application: 21202454.1
(73) Proprietor: Biosort AS, 1350 Lommedalen (NO)
(72) Inventor: SAUGEN, Bernt, 1350 Lommedalen (NO); IDSØ, Svein Tore, 0477 Oslo (NO); HAUGE, Geir Stang, 1163 Oslo (NO)
(74) Representative: Onsagers AS
(86) International application number: PCT/IB2017/050672
(87) International publication number: WO 2017/137896

(56) References cited:
- WO-A1-2011/115496
- WO-A2-2013/108251
- US-A1- 2014 376 783

## Description

The present invention concerns a device and method for recording and monitoring health and physical development in fish.

Today, the aqua culture business is a huge industry, which is competitive compared to other ways of producing animal derived food. The industry is relatively recent, and has large growth ambitions in the years to come. Presently, the industry is characterized by manual operations, and the level of precision is low in areas like fish counting, bio mass measurement, sea lice counting, disease surveillance, as well as monitoring fish health and growth rate.

As of today, it is not uncommon to experience a 15-20 % fish loss in a production cycle, and this causes huge economic losses, poor utilization of resources, poor fish food utilization, larger discharge of nutrient salts into the environment, and poor fish well-being (*"Tap av laksefisk i sjø; Hogne Bleie, 2004").* Fish lice and several contagious diseases is a growing problem for the business. Resistance is a known phenomenon in excessive use of chemicals or drugs on whole populations of a species.

The treatment regimens of today are largely performed on all the fish in a net cage, which means that up to 200 000 fish gets the same treatment. The treatment may be medication, use of chemicals, mechanical treatment, or slaughtering. The consequences are enhanced risk of resistance, as well as unnecessary large discharge of chemicals and drugs into the environment.

Further, the present treatment methods often involve starving fish, fish concentrating operations, as well as pumping fish into a different net cage or into a fish-tank ship. A fish concentrating operation comprises making the available swimming volume for the fish smaller. This is for instance performed by decreasing the volume of the net cages, and thus, increase the density of fish. For instance, this is performed by concentrating the fish in an area for treatment in the net cages, or for concentrating the fish for transfer onto a fish-tank ship using suction hoses or landing nets.

Generally, a fish-tank ship has an integrated method of concentrating the fish when it is time to unload the live fish off the ship. For example, this may be a bulkhead, which is moveable through the tank in the ship holding the fish. This bulkhead is moved through the tank to force the fish against the part of the tank from which the fish are released.

These treatments stress the fish, inflict damage, and possible loss of mucus layer. The mucous layer (*mucosa epithelia*) has been shown to be extremely important to the fish resistance against sea lice, and pathogens and loss of mucous layer makes the fish more susceptible than they are after suffering from wounds.

Today, the assessment of fish health in the aqua culture industry is primarily based on manual solutions; either directly through netting fish and performing manual inspection, and possible sampling, possibly using an underwater camera and analysing the images manually. No automatic solutions have been established, for analysing fish health, or solutions monitoring single individuals over time, and no solutions are established to sort out diseased fish. Presently, different automatic systems exist for measuring bio mass; however, these have an error of about 10%, and, the industry are looking for solutions providing bio mass measurements of greater accuracy.

NO 330863 discloses a device and method of measuring average weight, and feeding ad libidum in aqua culture plants. Several cameras are lowered into the net cages, and images are taken of the fish from different angles. The images are analysed to provide an indication of health condition of the fish, and average weight of the fish. Individual fish may be recognized, which is useful in adjusting average weight, calculate swimming speed (as a measure of fish health and number of fish per volume), etc.

NO 331843 describes a method and system of recognizing, treating, sorting, and documenting live fish. The main purpose of the system is to vaccinate fish, and the possibility of controlling the vaccination, possibly sort out undesired fish before vaccination. The system uses image recognition of fish being transported on a moving belt during the vaccination procedure.

WO 2005025309 describes a system for counting and estimating fish weight, possibly several fish simultaneously in a channel/pipe. To achieve this, several CCD sensors are used, which register the fish and calculate volume, and thus, the weight of each fish.

US2014376783 describes a system for identifying subjects of the same species in a population in order to monitor the population. The subjects are identified by means of image processing of images captured when the subject is placed isolated in a dedicated location and in a predetermined orientation and/or position to enable the imaging apparatus to capture image data which enables the subject identification apparatus to uniquely identify the selected subject.

WO2013108251 describes a system for guiding fish one at a time from a reservoir to a desired destination. Images of the fish may be captured during the transport between locations, and the images may be analyzed in order to categorize the fish and possibly choose destination according to the categorization. The fish is placed in a separate container for identification.

Consequently, there is a need for new methods of monitoring and treating fish in aqua culture plants.

The object of the present invention is to provide a device and a method of recording and monitoring health and physical development of fish.

The object of the invention is achieved by the features of claim 1 which discloses a system for recording and monitoring health and physical development of fish comprises at least an imaging device adapted for imaging a recording area, a data processor, a memory unit, and a guiding device for guiding fish through a recording area. The data processor is adapted to analysing images from the imaging device, and identify features of the fish in the recording area, wherein the features are characteristic of the health condition of the fish and individuals. The features are stored in the memory unit.

A method of recording and monitoring health and physical development of fish comprises, according to the invention defined by claim 14:
a) imaging fish passing a recording area using at least a imaging device,
b) analysing images from the imaging device, and identify features of fish which characterize health condition and individuals,
c) using the identified features to create a registry of individuals having passed through the recording area, and store this information in a memory unit, and
d) recording the features characterizing health condition in the registry for each individual.

The imaging device is a device capturing images of the recording area, and thus, possible fish situated in the recording area. Thus, by allowing fish desired to be monitored to pass through the recording area, images of the fish are recorded. The imaging device may comprise one or more cameras or other imaging sensors suitable for imaging electromagnetic waves of desired wavelength. This may be x-rays, ultraviolet light, visible light, infrared light, microwaves, etc. By using several sensors/cameras, a multidimensional imaging of the fish is possible.

In one embodiment, the recording area is formed mainly to be covered by the field of view of the imaging device, such that the fish cannot pass without being imaged. In this way, a complete recording of the fish desired to be recorded and monitored is secured. According to the invention, the recording area is partly or completely localised under water. Thus, the fish can swim freely through the recording area, and the recording will thus be as stress free as possible for the fish.

The guiding device is a device causing the fish to pass through the recording area. This may be e.g. a pump, suction hose, or other suction device, or a device pushing the fish against and through the recording area. Traditionally, this is performed when fish shall be transferred from a net cage to another place, which is a process called concentration. Other guiding devices may comprise an attracting means arranged at one side of the recording area, and a screen device to prevent the fish from reaching the attracting means without passing the recording area. The attracting means may for instance be light or bait, or it may be present in the form of a "fish lice snorkel", that is, a channel leading to the surface, through which the fish swim up to reach air.

A data processor analyses the images from the imaging device, and analyses features of the fish in the images, such as bodily dimensions, geometry, pigmentation, colour, condition of mucous layer, damages and/or other features characteristic of health condition, individual recognition, or physical development. One or more of the features is/are used for identifying single individuals, and each single individual are stored in the registry of the memory unit. Additional features are recorded in the same registry, for each individual.

The memory unit is a unit capable of storing data. In many embodiments, the memory unit will be physically connected to the data processor; however, it may also be wireless connected to the data processor, either in the same localisation, in a remote location, or in the form of a so-called cloud storage solution.

In an embodiment, the data processor may be adapted to calculate biomass for a group of fish. For example, based on bodily dimensions, the biomass of the complete group of fish can be calculated. If the recording and monitoring of health and physical development of live fish shall be performed in an aqua culture net cage, or in another delimited population of fish, in certain embodiments, a sub group of fish may be recorded and the mass calculated, and then, these mass data can be extrapolated to estimate biomass for the total population of fish.

According to the invention, the steps a) to d) are repeated at least once to be able to analyse the development of the fish. The features characterising health condition are compared to features of the same individual for at least one previous recording, and the comparison of features is used to analyse the development of the fish. Examples of this are development of individual wounds, revelation of anaemia in single individuals, e.g. based on deviations from expected growth based on data from previous measurements; however, which still have a momentary observable weight within the normal in the population, recording of increased number of parasites on the fish, etc.

The steps above are repeated once or several times with a desired time interval, e.g. each day, each week, each month, etc.

In an embodiment, the device comprises two chambers arranged on each side of the recording area, and, guiding devices guide the fish from one chamber to the next via the recording area. The guiding of the fish may for instance be performed as mentioned above. The cambers may for example be two chambers in a net cage. In non-claimed examples, two net cages may constitute a chamber each, or the chambers may be other arrangements.

In the case of two net cages with a guiding device arranged between the for transfer of the fish, the fish may for instance be guided into the guiding device using a concentrating device in the net cage in which the fish is initially situated, which concentrating device is moved or in other ways makes the volume of the net cage smaller, such that the fish by itself chose to swim into the guiding device to reach an area of more swimming space. This may be achieved with a plate, net, etc.

In an embodiment, the device according to the invention comprises a sorting device arranged in or after the recording area for sorting out and/or kill fish.

The sorting device may be connected to a treatment area for maintaining and treating fish for diseases or parasites, such that fish which have been sorted out is kept in another location that the other fish, e.g. for sea lice treatment, vaccination, or other treatment for different diseases

The sorting device may also be connected to a separate area for maintaining fish of a specific size. For example, all fish above a certain size may be sorted out into an assigned area for delivery to slaughter, and smaller fish are given more time to grow.

In an embodiment, the system comprises a device for removal of parasites using light, e.g. as described in NO 331345. Other known treatment methods may be used, such as Thermalicer (NO 332298), fish tank ship treatment, etc. Such systems may be integrated into the recording area, or may be connected to the device before or after the recording area, e.g. in a net cage.

In an embodiment, the device may comprise a RFID reader. In this case, each individual have been tagged with a RFID tag for use in identification of individuals. This may be used as a substitute for, or in addition to, individual recognition in the images, and may also be used to confirm recording of individuals.

The invention will now be described in more detail using examples, and with reference to the appended Figures.
Figure 1 schematically shows a device for recording and monitoring fish health.
Figure 2 schematically shows another embodiment of the invention used in an aqua culture net cage.
Figure 3 shows an alternative embodiment of the invention used in an aqua culture net cage.
Figure 4 shows an additional alternative embodiment of the invention used in an aqua culture net cage.
Figure 5 shows a further alternative embodiment of the invention used in an aqua culture net cage.
Figure 6 shows using two aqua culture net cages.
Figure 7 shows another alternative embodiment of the invention used in an aqua culture net cage.
Figure 8 shows an additional alternative embodiment of the invention used in an aqua culture net cage.
Figure 9 shows using two aqua culture net cages.

In the description of figures, a device for recording and monitoring health and physical development of fish is generally disclosed as a fish health scanner.

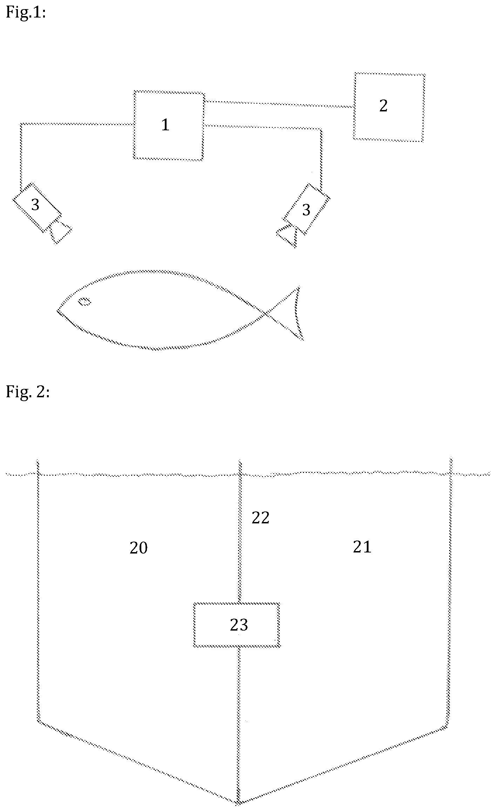

Figure 1 schematically shows a device for recording and monitoring fish health, comprising two imaging devices in the form of cameras 3 which images fish localised in a recording area, to record fish health and fish wellbeing of single individuals swimming freely, e.g. in an aqua culture net cage. The imaging data are processed by a data processor 1 to analyse images from the imaging device and identify features of the fish characterising health condition and individuals.

Data/features for each individual are stored in a database/registry 2 for later use.

Figure 2 schematically shows an aqua culture net cage divided by a vertical separation wall 22. The separation wall divides the net cage into two separate chambers 20 and 21. The two chambers are connected by a guiding device in the form of a channel 23, through which the fish are able to swim freely. In the channel, there is a fish health scanner, which registers fish health and fish wellbeing for each fish, as described above. The fish are attracted to, or pushed from one chamber to the other in a specified time interval to provide a generally continuous monitoring of all the fish.

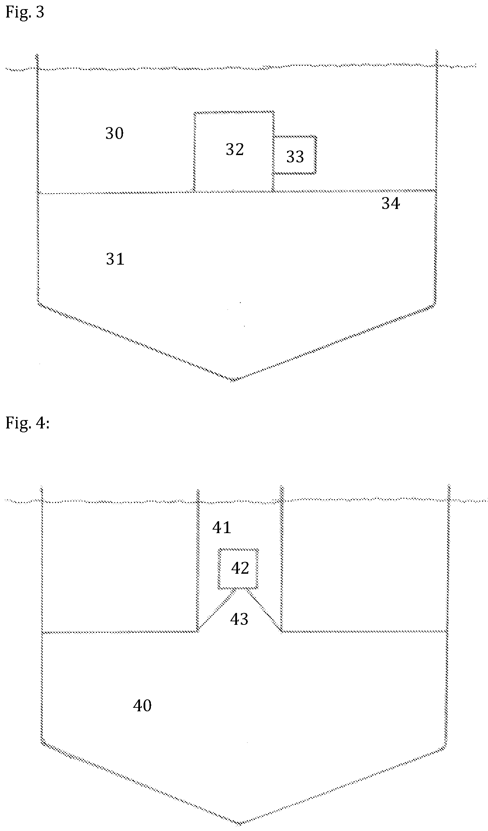

Figure 3 schematically shows an aqua culture net cage having a horizontal separating wall 34 in the net cage, which wall divides the net cage into a lower chamber 31 and an upper chamber 30. Recording and monitoring of fish health is initiated when all the fish are situated in the lower chamber 31. The fish are attracted into chamber 32 using light, food, or by gentle pushing from chamber 31.

When a suitable number of fish have entered chamber 32, it is closed off from chamber 31. The fish are guided or pushed farther into the fish health scanner 33, and allowed to swim freely into the upper chamber 30. When substantially all the fish are transferred from chamber 31 into chamber 30, the process is finished, and, substantially all the fish have been recorded. The process may be performed manually or automatically, and is repeated in specified time intervals of typically 4-8 weeks to create a complete picture of fish health and fish wellbeing over time.

Figure 4 schematically shows an aqua culture net cage with a sea lice snorkel 41. The fish are kept in chamber 40, and, thus, are forced to remain at a depth of 8-10 meters to avoid sea lice and other parasites, which are mainly residing in the upper layers of the water column. Salmon have an open air bladder, which has to be replenished with air every 7-14 days. Then, the fish will swim towards the available surface through an inner tube in the net cage, herein called a sea lice snorkel 41.

This cyclic migration to the surface may be exploited to guide 43 fish through a fish health scanner 42. The fish can freely swim back down again through a trap inside the snorkel.

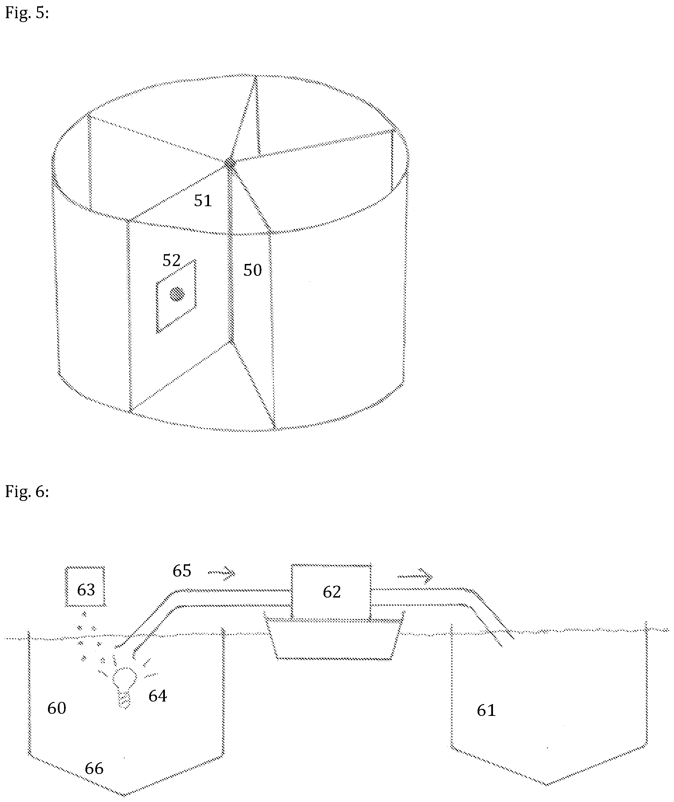

Figure 5 schematically shows an aqua culture net cage with movable bulkheads 50 and 51. The movable bulkheads are used to transfer fish from one chamber to the next through a fish health scanner 52, which record fish health and fish wellbeing of passing fish.

Figure 6 schematically shows two aqua culture net cages 60 and 61. Fish are in net cage 60 attracted in towards the mouth of a suction hose 65 using light 64, food 63, or gentle pushing 66. The fish are transported up into a holding chamber 62 on a raft, at which they are scanned before being transported to net cage 61.

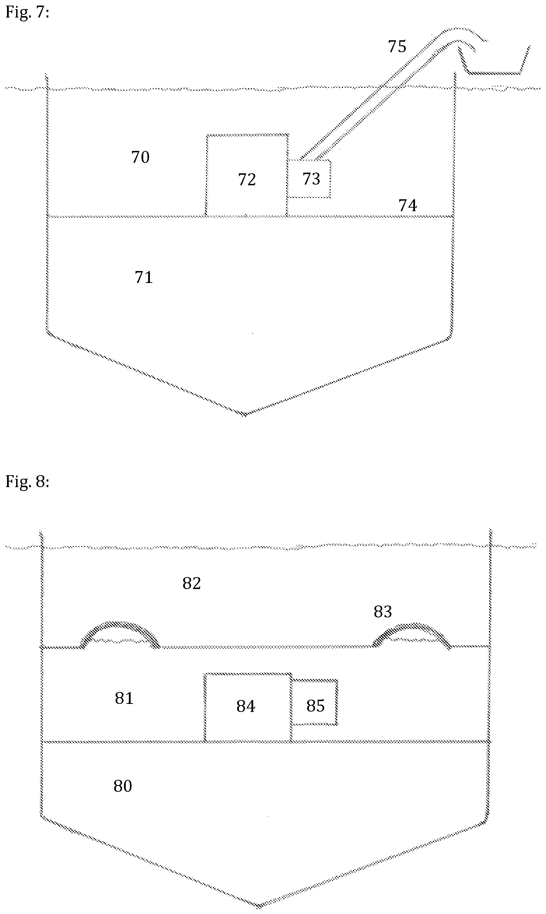

Figure 7 schematically shows an aqua culture net cage having a horizontal separating wall 74, which divides the net cage into a lower chamber 71 and an upper chamber 70. The recording of fish health is initiated when all the fish are kept in the lower chamber 71. The fish are attracted into chamber 72 using light, food, or gentle pushing in chamber 71. When a suitable number of fish has arrived in chamber 72, this chamber is closed off from chamber 71. The fish are guided or pushed further into the fish health scanner 73, and, healthy and approved fish swim freely into upper chamber 70. Weak, injured, or diseased fish are sorted out through a hose 75 to an external chamber. Following the transfer of substantially all the fish from chamber 71 to chamber 70, the process is finished, and substantially all the fish have been scanned and sorted. The processes are performed automatically and typically last 2-4 days. The cycle is repeated at specified time intervals, typically 4-8 weeks, to create a complete picture of fish health and fish wellbeing over time.

Figure 8 schematically shows an aqua culture net cage in which fish are kept permanently submerged in chambers 80 and 81. The fish have access to an artificial surface to replenish the air bladder in open domes 83 filled with air. The dome may have any suitable shape, e.g. rounded, or square. The fish are alternatingly transferred from chamber 80 to chamber 81 through a guiding device 84 to fish health scanner 85 using gentle pushing operations or attraction.

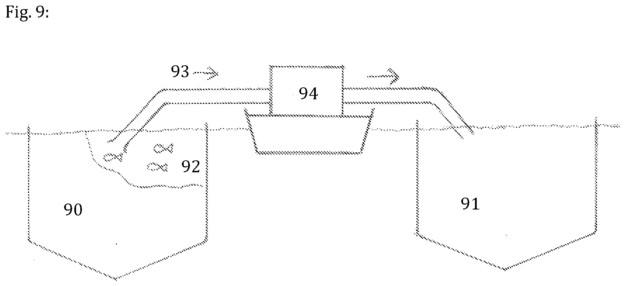

Figure 9 schematically shows two aqua culture net cages 90 and 91. Fish are transferred from net cage 90 to 91 using a traditional push and pump operation 92. The fish are pumped, or swim, through a fish health scanner 94 for recording and sorting.

## Claims

1. System for recording and monitoring health and physical development of live fish, comprising:
- an aquaculture cage,
- at least an imaging device (3) adapted to image a recording area localized under water within the cage, the recording area being formed to allow fish to swim through it,
- a data processor (1), and a memory unit (2),
wherein the data processor (1) is adapted to analyse images from the imaging device and identify features of the fish, which features characterize individuals, health condition thereof, and physical development thereof, and store the features in the memory unit, and to compare features of the fish with characteristics stored in the memory unit (2) for the same individual, and identify differences of the health condition and growth of the same individual over time.

2. System according to claim 1, where the recording area is arranged in an inner tube providing access to the water surface.

3. System according to claim 1, comprising a guiding device (23, 43, 84) for guiding fish through the recording area.

4. System according to claim 1, wherein the recording area is formed such that the field of view of the imaging device (3) covers the complete recording area.

5. System according to claim 1, comprising two chambers (20, 21) arranged on each side of the recording area.

6. System according to claim 3, wherein the guiding device comprises an attracting means at one side of the recording area, and a screen device to prevent the fish from reaching the attracting means without passing the recording area.

7. System according to claim 6, wherein the attracting means is light, air, or bait.

8. System according to claims 3, 6 and 7, wherein the guiding device comprises a pump, or suction hose, to guide the fish through the recording area.

9. System according to claim 8, wherein the guiding device comprises a device to push the fish against and through the guiding device.

10. System according to one of the preceding claims, comprising a sorting device arranged in or after the recording area for sorting out and/or killing fish.

11. System according to claim 10, wherein the sorting device is connected to a treatment area for maintaining and treating fish for diseases or parasites.

12. System according to one of the preceding claims, further comprising a device for removing parasites using light.

13. System according to one of the preceding claims, comprising a RFID reader.

14. Method of recording and monitoring health and physical development of live fish, comprising:
a) imaging fish passing a recording area localized under water within an aquaculture cage using at least one imaging device (3), the recording area being formed to allow fish to swim through it,
b) analysing images from the imaging device and identify features of fish, which features characterize individuals, health condition thereof and physical development thereof,
c) by means of the identified features, forming a registry of individuals having passed the recording area, and storing the features in a memory unit (2), and
d) recording the features characterizing the health condition in the registry for each individual,
where the steps a) to d) are repeated at least once, the features characterizing the health condition are compared for each repetition with the features of the same individual from at least one earlier recording, and the comparison of the features is used to analyse the development of the same individual over time.

15. Method according to claim 14, where the recording area is arranged in an inner tube providing access to the water surface.

16. Method of claim 14,
in which each repetition takes place with a predetermined time interval.

17. Method according to one of claims 14-16,
in which the fish are attracted into passing through the recording area.

18. Method according to claim 17,
wherein the fish are attracted by means of light, air or bait.

19. Method according to one of claims 14-18,
wherein the fish are forced through a recording area using a pump or a suction hose.

20. Method according to one of claims 14-19,
wherein the fish are pushed against and through a recording area.

21. Method according to one of claims 14-20,
comprising identifying fish with impaired health condition, and sorting out and/or killing fish after the recording area.

22. Method according to one of claims 14-21,
comprising transferring fish to a treatment area for keeping and treatment of the fish for diseases or parasites.

23. Method according to claim 22, wherein parasites are removed from the fish using light.

## Patentansprüche

1. System zur Aufzeichnung und Überwachung eines Gesundheitszustandes und einer körperlichen Entwicklung lebender Fische, wobei das System Folgendes aufweist:
- einen Aquakulturkäfig,
- mindestens eine Abbildungsvorrichtung (3), die dazu ausgelegt ist, einen unter Wasser befindlichen Aufzeichnungsbereich innerhalb des Käfigs abzubilden, wobei der Aufzeichnungsbereich so ausgebildet ist, dass Fische durch ihn hindurchschwimmen können,
- einen Datenprozessor (1), und eine Speichereinheit (2),
wobei der Datenprozessor (1) dazu ausgelegt ist, Bilder von der Abbildungsvorrichtung zu analysieren und Merkmale der Fische zu identifizieren, wobei die Merkmale Individuen, deren Gesundheitszustand und deren körperliche Entwicklung charakterisieren, und dazu ausgelegt ist, die Merkmale in der Speichereinheit zu speichern, und Merkmale der Fische mit in der Speichereinheit (2) für dasselbe Individuum gespeicherten Merkmalen zu vergleichen und Unterschiede des Gesundheitszustands und des Wachstums desselben Individuums über die Zeit zu identifizieren.

2. System nach Anspruch 1, wobei der Aufnahmebereich in einem Innenrohr angeordnet ist, das Zugang zur Wasseroberfläche bietet.

3. System nach Anspruch 1, das eine Führungsvorrichtung (23, 43, 84) zum Führen von Fischen durch den Aufzeichnungsbereich aufweist.

4. System nach Anspruch 1, bei dem der Aufnahmebereich so ausgebildet ist, dass das Sichtfeld der Abbildungsvorrichtung (3) den gesamten Aufnahmebereich abdeckt.

5. System nach Anspruch 1, das zwei Kammern (20, 21) aufweist, die auf jeder Seite des Aufnahmebereichs angeordnet sind.

6. System nach Anspruch 3, wobei die Führungsvorrichtung ein Lockmittel an einer Seite des Aufnahmebereichs aufweist und eine Abschirmvorrichtung aufweist, die verhindert, dass der Fisch das Lockmittel erreicht, ohne den Aufnahmebereich zu durchqueren.

7. System nach Anspruch 6, wobei das Lockmittel Licht, Luft oder ein Köder ist.

8. System nach Anspruch 3, 6 und 7, wobei die Führungsvorrichtung eine Pumpe oder einen Saugschlauch aufweist, um den Fisch durch den Aufnahmebereich zu führen.

9. System nach Anspruch 8, wobei die Führungseinrichtung eine Vorrichtung aufweist, um den Fisch gegen und durch die Führungseinrichtung zu drängen.

10. System nach einem der vorhergehenden Ansprüche, das eine im oder nach dem Aufnahmebereich angeordnete Sortiervorrichtung zum Aussortieren und/oder Töten von Fischen aufweist.

11. System nach Anspruch 10, wobei die Sortiervorrichtung mit einem Behandlungsbereich zur Pflege und Behandlung von Fischen gegen Krankheiten oder Parasiten verbunden ist.

12. System nach einem der vorhergehenden Ansprüche, das ferner eine Vorrichtung zur Entfernung von Parasiten mit Hilfe von Licht aufweist.

13. System nach einem der vorangehenden Ansprüche, das ein RFID-Lesegerät aufweist.

14. Verfahren zum Aufzeichnen und Überwachen eines Gesundheitszustands und einer körperlichen Entwicklung von lebenden Fischen, wobei das Verfahren folgende Schritte umfasst:
a) Abbilden von Fischen, die einen unter Wasser gelegenen Aufzeichnungsbereich innerhalb eines Aquakulturkäfigs durchqueren, unter Verwendung mindestens einer Abbildungsvorrichtung (3), wobei der Aufzeichnungsbereich so ausgebildet ist, dass die Fische durch ihn hindurchschwimmen können,
b) Analysieren der Bilder von der Abbildungsvorrichtung und Identifizierung von Merkmalen der Fische, wobei diese Merkmale Individuen, ihren Gesundheitszustand und ihre körperliche Entwicklung charakterisieren,
c) Erstellen eines Registers von Individuen, die den Aufnahmebereich durchquert haben, mit Hilfe der identifizierten Merkmale und Speichern der Merkmale in einer Speichereinheit (2), und
d) Aufzeichnen der Merkmale, die den Gesundheitszustand charakterisieren in dem Register für jedes Individuum, wobei die Schritte a) bis d) mindestens einmal wiederholt werden, und die Merkmale, die den Gesundheitszustand charakterisieren bei jeder Wiederholung mit den Merkmalen desselben Individuums aus mindestens einer früheren Aufzeichnung verglichen werden und der Vergleich der Merkmale zur Analyse der zeitlichen Entwicklung desselben Individuums verwendet wird.

15. Verfahren nach Anspruch 14, wobei der Aufnahmebereich in einem Innenrohr angeordnet ist, das Zugang zur Wasseroberfläche bietet.

16. Verfahren nach Anspruch 14, bei dem jede Wiederholung in einem vorgegebenen Zeitintervall erfolgt.

17. Verfahren nach einem der Ansprüche 14 bis 16, bei dem die Fische angelockt werden, damit sie den Aufnahmebereich durchqueren.

18. Verfahren nach Anspruch 17, bei dem die Fische mit Hilfe von Licht, Luft oder Ködern angelockt werden.

19. Verfahren nach einem der Ansprüche 14 bis 18, bei dem die Fische mit Hilfe einer Pumpe oder eines Saugschlauchs durch einen Aufnahmebereich gezwungen werden.

20. Verfahren nach einem der Ansprüche 14 bis 19, bei dem die Fische gegen und durch einen Aufnahmebereich gedrängt werden.

21. Verfahren nach einem der Ansprüche 14 bis 20, bei dem Fische mit beeinträchtigtem Gesundheitszustand identifiziert und nach dem Aufnahmebereich aussortiert und/oder getötet werden.

22. Verfahren nach einem der Ansprüche 14 bis 21, umfassend das Verbringen der Fische in einen Behandlungsbereich zur Aufbewahrung und Behandlung der Fische gegen Krankheiten oder Parasiten.

23. Verfahren nach Anspruch 22, wobei Parasiten mit Hilfe von Licht von den Fischen entfernt werden.

## Revendications

1. Système d'enregistrement et de surveillance de santé et de développement physique de poissons vivants, comprenant :
- une cage d'aquaculture,
- au moins un dispositif d'imagerie (3) adapté pour imager une zone d'enregistrement localisée sous l'eau au sein de la cage, la zone d'enregistrement étant formée pour permettre à des poissons de nager à travers celle-ci,
- un processeur de données (1), et une unité de mémoire (2),
dans lequel le processeur de données (1) est adapté pour analyser des images provenant du dispositif d'imagerie et identifier des particularités des poissons, lesquelles particularités caractérisent des individus, leur état de santé, et leur développement physique, et stocker les particularités dans l'unité de mémoire, et pour comparer des particularités des poissons avec des caractéristiques stockées dans l'unité de mémoire (2) pour le même individu, et identifier des différences de l'état de santé et de la croissance du même individu dans le temps.

2. Système selon la revendication 1, dans lequel la zone d'enregistrement est agencée dans un tube interne fournissant un accès à la surface de l'eau.

3. Système selon la revendication 1,
comprenant un dispositif de guidage (23, 43, 84) pour guider des poissons à travers la zone d'enregistrement.

4. Système selon la revendication 1,
dans lequel la zone d'enregistrement est formée de sorte que le champ de vision du dispositif d'imagerie (3) couvre la zone d'enregistrement entière.

5. Système selon la revendication 1,
comprenant deux chambres (20, 21) agencées sur chaque côté de la zone d'enregistrement.

6. Système selon la revendication 3,
dans lequel le dispositif de guidage comprend un moyen d'attraction d'un côté de la zone d'enregistrement, et un dispositif de crible pour empêcher les poissons d'atteindre le moyen d'attraction sans passer par la zone d'enregistrement.

7. Système selon la revendication 6,
dans lequel le moyen d'attraction est de la lumière, de l'air, ou un appât.

8. Système selon les revendications 3, 6 et 7,
dans lequel le dispositif de guidage comprend une pompe, ou un tuyau d'aspiration, pour guider les poissons à travers la zone d'enregistrement.

9. Système selon la revendication 8,
dans lequel le dispositif de guidage comprend un dispositif pour pousser les poissons contre et à travers le dispositif de guidage.

10. Système selon l'une des revendications précédentes,
comprenant un dispositif de tri agencé dans ou après la zone d'enregistrement pour trier et/ou abattre des poissons.

11. Système selon la revendication 10,
dans lequel le dispositif de tri est raccordé à une zone de traitement pour conserver et traiter des poissons contre des maladies ou des parasites.

12. Système selon l'une des revendications précédentes,
comprenant en outre un dispositif pour éliminer des parasites à l'aide de lumière.

13. Système selon l'une des revendications précédentes, comprenant un lecteur RFID.

14. Procédé d'enregistrement et de surveillance de santé et de développement physique de poissons vivants,
comprenant :
a) l'imagerie de poissons passant par une zone d'enregistrement localisée sous l'eau au sein d'une cage d'aquaculture à l'aide d'au moins un dispositif d'imagerie (3), la zone d'enregistrement étant formée pour permettre à des poissons de nager à travers celle-ci,
b) l'analyse d'images provenant du dispositif d'imagerie et l'identification de particularités de poissons, lesquelles particularités caractérisent des individus, leur état de santé et leur développement physique,
c) au moyen des particularités identifiées, la formation d'un registre d'individus qui sont passés par la zone d'enregistrement, et le stockage des particularités dans une unité de mémoire (2), et
d) l'enregistrement des particularités caractérisant l'état de santé dans le registre pour chaque individu,
dans lequel les étapes a) à d) sont répétées au moins une fois, les particularités caractérisant l'état de santé sont comparées pour chaque répétition avec les particularités du même individu provenant d'au moins un enregistrement antérieur, et la comparaison des particularités est utilisée pour analyser le développement du même individu dans le temps.

15. Procédé selon la revendication 14, dans lequel la zone d'enregistrement est agencée dans un tube interne fournissant un accès à la surface de l'eau.

16. Procédé selon la revendication 14,
dans lequel chaque répétition a lieu avec un intervalle de temps prédéterminé.

17. Procédé selon l'une des revendications 14 à 16,
dans lequel les poissons sont attirés dans le passage à travers la zone d'enregistrement.

18. Procédé selon la revendication 17,
dans lequel les poissons sont attirés au moyen de lumière, d'air ou d'un appât.

19. Procédé selon l'une des revendications 14 à 18,
dans lequel le passage des poissons à travers une zone d'enregistrement est forcé à l'aide d'une pompe ou d'un tuyau d'aspiration.

20. Procédé selon l'une des revendications 14 à 19,
dans lequel les poissons sont poussés contre et à travers une zone d'enregistrement.

21. Procédé selon l'une des revendications 14 à 20,
comprenant l'identification de poissons avec un état de santé dégradé, et le tri et/ou l'abattage de poissons après la zone d'enregistrement.

22. Procédé selon l'une des revendications 14 à 21,
comprenant le transfert de poissons vers une zone de traitement pour garder et traiter les poissons contre des maladies ou des parasites.

23. Procédé selon la revendication 22, dans lequel des parasites sont éliminés des poissons à l'aide de lumière.
